# EUROPÄISCHE PATENTSCHRIFT

(11) **EP 2 308 315 B1**
(45) Veröffentlichungstag und Bekanntmachung des Hinweises auf die Patenterteilung: **27.07.2016**
(21) Anmeldenummer: 10177511.2
(22) Anmeldetag: 18.09.2010
(51) Int. Cl.: A22C 17/14

(54) **QUETSCHEINRICHTUNG EINER TIERDARM-REINIGUNGSLINIE, SOWIE ABLAUFBLECH DAFÜR**
SQUEEZING DEVICE OF AN ANIMAL INTESTINE CLEANING LINE, AND RUNOFF PLATE FOR SAME
DISPOSITIF DE COINCEMENT D'UNE LIGNE DE NETTOYAGE D'INTESTIN ANIMAL ET TÔLE D'ÉCOULEMENT CORRESPONDANTE

(30) Priorität: 06.10.2009 DE 102009044188; 18.02.2010 DE 102010000463
(43) Veröffentlichungstag der Anmeldung: 13.04.2011
(73) Patentinhaber: Holdijk & Haamberg GmbH, 48599 Gronau (DE)
(72) Erfinder: Holdijk, Arend, 7547 RZ, Enschede (NL)
(74) Vertreter: Habbel, Ludwig

(56) Entgegenhaltungen:
- EP-A1- 0 514 693
- GB-A- 877 314
- US-A- 1 077 488

## Beschreibung

Die Erfindung betrifft eine Quetscheinrichtung nach dem Oberbegriff des Anspruches 1.

Aus der DE 856 856 B ist eine Kaldaunenwascheinrichtung bekannt, und aus der GB 877 314 A sind ein Verfahren und eine Vorrichtung zum Reinigen von Innereien bekannt, die als Wursthüllen oder dergleichen Verwendung finden sollen.

Aus der Praxis bekannte Reinigungslinien für Tierdärme umfassen mehrere Stationen:
Nachdem der Darm, der zunächst als von Häuten zusammengehaltenes Darmpaket vorliegt, freigeschnitten ist, so dass er über seine gesamte Länge ausgestreckt werden kann, wird er durch eine erste Station geführt, wobei diese erste Station zwei Druckkörper aufweist, üblicherweise Walzen, zwischen die der Tierdarm geführt wird und die den im Tierdarm enthaltenen Kot aus dem Darm herauspressen. Ein weiterer Druckkörper, beispielsweise auch in Form einer Walze, ist vorgesehen, um den im Inneren des Darms befindlichen Schleim, welcher der Darmwandung anhaftet, zu lockern.

In einer zweiten Station, die grundsätzlich einen ähnlichen Aufbau wie die erste Station aufweisen kann, wird zwischen den beiden Druckkörpern der Schleim aus dem Darminneren herausgedrückt, wobei an dieser Station beispielsweise 60 - 70 % des Darmschleims aus dem Darm entfernt werden. Der dritte Druckkörper, der auch an dieser zweiten Station vorgesehen sein kann, dient dazu, die festeren Schleimbestandteile, die in dieser Station noch nicht aus dem Darm entfernt wurden, zu lockern.

In einer dritten Station, die ebenfalls ähnlich wie die erste und die zweite Station ausgestaltet sein kann, werden diese restlichen Schleimanteile aus dem Darm entfernt.

Die Gewinnung des Schleims aus dem Tierdarm ist beispielsweise bei Schweinedärmen bekannt, wo der Schleim später als eigenständiges Produkt weiter gehandelt und verarbeitet werden kann.

Um die einzelnen Stationen der Reinigungslinie vor Verschmutzungen und Verklebungen zu schützen, werden die Stationen stets mit einer vergleichsweisen großen Wassermenge kontinuierlich gespült, um das Bilden von Anhaftungen von vornherein zu vermeiden. Im Bereich der zweiten und dritten Station ergibt sich daher das Problem, dass über das Ablaufblech der gewonnene Schleim zusammen mit einem Anteil des Spülwassers abläuft. Dies ist in zweierlei Hinsicht nachteilig:
Um den Wasserverbrauch für die Tierdarm-Reinigungslinie so niedrig wie möglich zu halten, wird das verwendete Wasser vorteilhaft im Kreislauf geführt. Verunreinigungen durch die Schleimanteile im Wasser erschweren die Aufbereitung des Wassers bzw. erfordern einen wirtschaftlich und technisch nachteiligen Aufwand. Zweitens stellt es einen wirtschaftlichen Nachteil dar, wenn von dem handelsfähigen Gut, nämlich dem gewonnenen Schleim, ein Anteil verlorengeht und in das Wasser gerät, statt verkauft zu werden. Zudem ist der Preis des verkäuflichen Schleims dadurch vergleichsweise niedrig, dass der Schleim unerwünscht große Wasseranteile enthält, so dass die Kunden für die abgenommene Menge nicht den Preis zu entrichten bereit sind, der für reinen Schleim entrichtet würde. Auch ökologisch ist der im Schleim enthaltene Anteil an Spülwasser nachteilig, da beispielsweise beim Transport des Schleims ein nicht unerheblicher Gewichtsanteil auf das an sich nicht gewünschte Wasser entfällt und der Transport dementsprechend uneffektiv ist.

Der Erfindung liegt die Aufgabe zugrunde, eine gattungsgemäße Quetscheinrichtung dahingehend zu verbessern, dass diese eine möglichst hohe Schleimausbeute mit möglichst hoher Schleimqualität ermöglicht sowie einen möglichst wirtschaftlichen Betrieb der Quetscheinrichtung ermöglicht.

Diese Aufgabe wird durch eine Quetscheinrichtung mit den Merkmalen des Anspruches 1 gelöst. Ein Ablaufblech nach Anspruch 8 kann dazu dienen, eine schon vorhandene Quetscheinrichtung vorschlagsgemäß und somit mit den entsprechenden Vorteilen auszugestalten.

Die Erfindung schlägt mit anderen Worten vor, den Schleim vom zur Spülung der Einrichtung genutzten Wasser zu trennen. Während auf dem Ablaufblech zunächst sowohl Schleim und Wasser nach unten strömt, so dass dieser Abschnitt des Ablaufblechs als Gemischabschnitt bezeichnet wird, verläuft das Ablaufblech anschließend in Form einer Außenkurve, also konvex gebogen, so dass dieses Gemisch von Schleim und Wasser dieser Biegung folgen muss, um weiter am Ablaufblech anzuliegen.

Dabei verliert allerdings der Schleim im Bereich dieser Biegung die Anhaftung am Ablaufblech und tropft nach unten, so dass er in einer Schleimrinne unterhalb der Biegung aufgefangen werden kann, und zwar mit einer erheblich verbesserten Reinheit aufgrund eines entsprechend niedrigen Wasseranteils an Spülwasser im Schleim.

Das Ablaufblech verläuft allerdings noch weiter als nur bis zur Biegung:
An die Biegung schließt sich in Strömungsrichtung des Wassers ein Abschnitt des Ablaufbleches an, der als Wasserabschnitt bezeichnet ist, weil nach dem Abtropfen des Schleims in diesem Abschnitt ausschließlich Wasser, aufgrund von Kohäsionskräften, am Ablaufblech anhaftet. Durch diesen Kohäsionseffekt kann das Wasser mit Hilfe des Ablaufbleches bis zu einer Stelle geführt werden, die von der Biegung so weit entfernt ist, dass das Wasser von der Schleimrinne entfernt aufgefangen werden kann.

Dabei kann und dass in Strömungsrichtung des Wassers gesehen hinter der Schleimrinne eine zusätzliche Wasserrinne vorgesehen sein, in welche das Wasser gelangt, so dass das Wasser mittels der Wasserrinne zu einer bestimmten Stelle geleitet werden kann. Auf die Wasserrinne kann aber in den meisten Fällen verzichtet werden, wenn nämlich unterhalb der Quetscheinrichtung ohnehin ein Wassertank vorgesehen ist, der beispielsweise mit einem Rost abgedeckt ist, so dass das Wasser problemlos einfach in den Wassertank tropfen kann.

Durch diese Ausgestaltung des Ablaufblechs wird sowohl die Qualität des Schleims verbessert, weil dieser möglichst rein erfasst und gesammelt werden kann, als auch die Qualität des Spülwassers, weil der Anteil an darin enthaltenen Verunreinigungen in Form von Schleim erheblich verringert werden kann, so dass die Wasseraufbereitung zur Wiederverwendung des Spülwassers erheblich wirtschaftlicher erfolgen kann.

Vorteilhaft kann der Wasserabschnitt des Ablaufbleches von der Biegung aus mit einer geringen Neigung abwärts verlaufen. Davon ausgehend, dass durch die Biegung selbst das Abtropfen des Schleims bewirkt wird, wird das Ablösen des Wassers vom Wasserabschnitt durch die entsprechend abwärts verlaufende Neigung des Wasserabschnitts vermieden, so dass das Wasser zuverlässig bis zu einer vorbestimmten Stelle geführt werden kann, an welcher es in die Wasserrinne gelangt.

Alternativ dazu kann vorgesehen sein, dass der Wasserabschnitt von der Biegung aus horizontal verläuft. Dadurch, dass kein weiterer Abwärtsverlauf des Ablaufblechs hinter der Biegung vorgesehen ist, wird der Abriss des Schleims von dem Ablaufblech zuverlässig sichergestellt, so dass die "Trennschärfe" des Ablaufblechs besonders zuverlässig ist. Aufgrund der Kohäsionskräfte folgt das Wasser dem Ablaufblech noch zuverlässig über die Biegung hinaus, im Bereich des Wasserabschnitts.

Schließlich kann alternativ zu den beiden vorbeschriebenen Ausführungen auch vorgesehen sein, dass der Wasserabschnitt von der Biegung aus mit einer geringen Neigung aufwärts verläuft. Hierdurch wird die Trennschärfe des Ablaufblechs optimiert und zuverlässig vermieden, dass Schleim über den Bereich der Biegung hinaus dem Ablaufblech folgt, während durch die erwähnten Kohäsionskräfte das Wasser über die Biegung hinaus dem Ablaufblech folgt und von der Schleimrinne entfernt in der Wasserrinne aufgenommen werden kann.

Vorteilhaft kann die Biegung einen vergleichsweise großen Radius von mehreren Zentimetern aufweisen. Bei einer kleinen Biegung, beispielsweise bei gekanteten Blechen, die lediglich ein Kantradius von wenigen Millimetern aufweisen, kommt es zum Abtropfen sowohl des Schleims als auch des Wassers von dem Ablaufblech. Durch den großen Radius hingegen wird ein Abriss des Wasserfilms von dem Ablaufblech vermieden, während der Schleim, der vermutlich auf dem Wasserfilm aufliegt, im Bereich der Biegung zuverlässig vom Ablaufblech sich ablöst und in die Schleimrinne tropft.

Das Ablaufblech kann vorteilhaft an seiner Oberfläche beschichtet sein, und zwar der Oberfläche, auf welcher der Schleim bzw. das Wasser geführt ist. Dabei kann diese Beschichtung lediglich bereichsweise vorgesehen sein, beispielsweise im Bereich der Biegung und/oder des Wasserabschnitts. Die Beschichtung kann insbesondere derart ausgewählt sein, dass sie eine zuverlässige Ablösung des Schleims bzw. des Wassers vom Ablaufblech begünstigt, so dass dementsprechend der vom Ablaufblech abgelöste Schleim bzw. das vom Ablaufblech abgelöste Wasser sich an einer definierten Stelle vom Ablaufblech löst und dementsprechend präzise in der darunter befindlichen Schleimrinne bzw. Wasserrinne aufgefangen werden kann.

Die Fläche, auf welcher das Wasser und der Schleim ablaufen, wird im Rahmen des vorliegenden Vorschlags als Ablaufblech bezeichnet. Tatsächlich kann es sich bei diesem Bauteil vorteilhaft um ein metallisches Bauteil aus Blech handeln, beispielsweise aus einem korrosionsbeständigen und lebensmittelhygienisch unbedenklichen Edelstahl. Derartige Bleche können problemlos bearbeitet werden, sind leicht zu reinigen, jedoch kann ein Ablaufblech auch aus anderen Werkstoffen bestehen, beispielsweise aus Kunststoff oder aus keramischen Werkstoffen.

Die vorschlagsgemäße Ausgestaltung einer Quetscheinrichtung kann nicht nur bei neuen Quetscheinrichtungen verwirklicht werden, sondern auch durch entsprechende Änderung eines an einer bereits vorhandenen Quetscheinrichtung befindlichen Ablaufblechs.

Dabei kann beispielsweise vorgesehen sein, das vorhandene Ablaufblech nach wie vor zu nutzen und lediglich um den Bereich der Biegung und des Wasserabschnitts zu ergänzen. Ein vorschlagsgemäßes Ablaufblech kann daher als Ergänzungsteil ausgestaltet sein, welches an ein bereits vorhandenes Ablaufblech angeschlossen wird, so dass das vorhandene Ablaufblech den Gemischabschnitt ausbildet, während das vorschlagsgemäße Ablaufblech als Ergänzungsteil den Bereich der Biegung und des Wasserabschnitts aufweist.

Alternativ dazu kann ein vorschlagsgemäßes Ablaufblech als Austauschteil ausgestaltet sein, welches an einer vorhandenen Station das dortige Ablaufblech ersetzt und sowohl den Gemischabschnitt als auch die Biegung und den Wasserabschnitt aufweist. Der Vorteil dieser Austauschvariante besteht darin, dass die mit dem Schleim bzw. dem Wasser in Kontakt kommende Oberfläche fugenlos ausgestaltet sein kann und fugenlos einteilig vom Gemischabschnitt in die Biegung und den sich daran anschließenden Wasserabschnitt übergehen kann, so dass ein unkontrollierter bzw. unerwünschter Strömungsabriss des Schleims oder des Wassers von dem Ablaufblech an einer unerwünschten Stelle möglichst ausgeschlossen ist.

Bei der Ausgestaltung als Austauschteil kann ein vorschlagsgemäßes Ablaufblech vorteilhaft an die übrige Maschinenkonstruktion derart angepasst sein, dass dieses Austauschteil die gleichen Befestigungselemente aufweist, beispielsweise Bohrungen in dem selben Durchmesser und an den gleichen Stellen wie das Original-Ablaufblech, oder Gewinde in Form von Gewindebohrungen, Stehbolzen od. dgl., so dass der Austausch der Ablaufbleche erheblich vereinfacht wird und keine Anpassarbeiten des Ablaufblechs vor Ort durch das Montagepersonal vorgenommen werden müssen, sondern vielmehr das werkseitig vorbereitete Ablaufblech im einfach durchzuführenden Austausch gegen das ursprünglich an der Arbeitsstation vorhandene Ablaufblech ausgetauscht werden kann.

Ein Ausführungsbeispiel der Erfindung wird anhand der rein schematischen Darstellungen nachfolgend näher erläutert. Dabei zeigt
- Fig. 1: eine schematische perspektivische Ansicht auf eine Arbeitsstation, bei welcher zwei Ablaufbleche vorgesehen sind, von denen eins vorschlagsgemäß ausgestaltet ist, und
- Fig.2: eine Seitenansicht auf die Arbeitsstation von Fig. 1.

In den Zeichnungen ist mit 1 insgesamt eine als Quetscheinrichtung bezeichnete Station einer Tierdarm-Reinigungslinie bezeichnet. Die Quetschstation 1 weist eine in einem Gehäuse gekapselte Antriebseinheit 2 auf sowie zwei Druckkörper in Form von zwei Walzen 3, zwischen die ein Tierdarm eingeführt werden kann. Eine dritte Walze 4 ist in Förderrichtung hinter den beiden Walzen 3 vorgesehen.

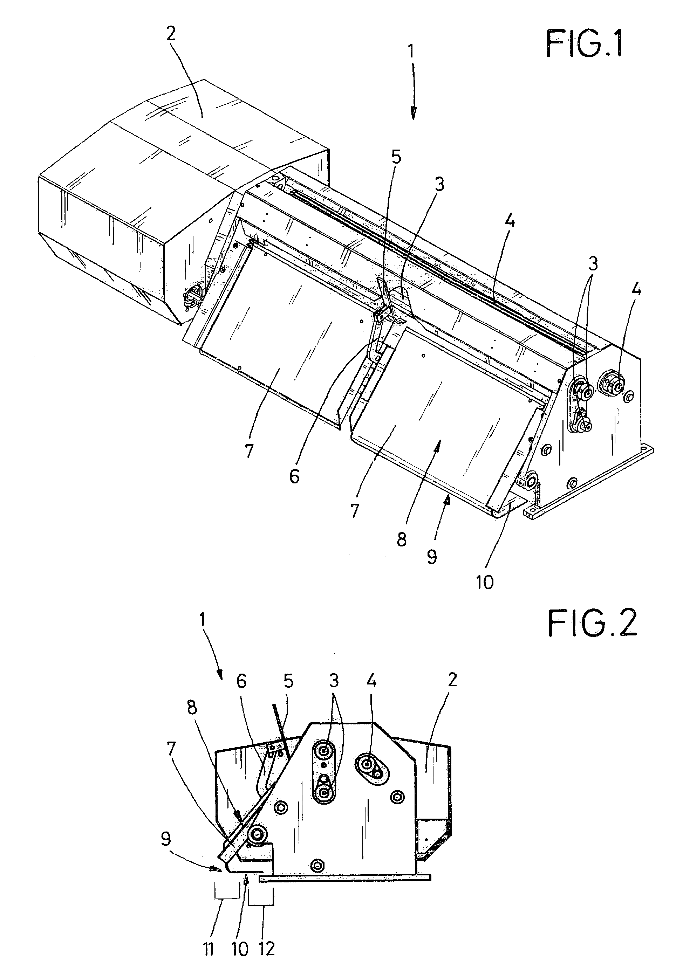

Die Förderrichtung des Tierdarms erfolgt in beiden Darstellungen jeweils von links nach rechts. Der Tierdarm, der eine Länge von beispielsweise etwa 18 m aufweisen kann, wird ungefähr im Bereich der Hälfte seiner Länge über einen Zuführungshaken 5 gelegt, der mittels eines Gelenkhebels 6 zwischen seiner in Fig. 1 dargestellten Beladestellung und einer den Walzen 3 näheren Zuführungsstellung beweglich ist. Auf diese Weise wird der Tierdarm den beiden Walzen 3 zugeführt, so dass er mit diesem vordersten Abschnitt, der sich ungefähr auf der Hälfte seiner Länge befindet, zwischen die beiden Walzen 3 gerät, so dass der von Kot bereits vorgereinigte Darm nun von dem in seinem Inneren befindlichen Darmschleim gereinigt werden kann, indem dieser Schleim zwischen den beiden Walzen 3 aus dem Tierdarm herausgepresst wird. Im Bereich der Walzen 3 und 4 wird die Quetschstation 1 permanent mit Wasser gespült, um Anhaftungen an den Walzen und Verklebungen der Quetschstation 1 zu vermeiden. Ein Teil dieses Spülwassers sowie der aus dem Darm austretende Schleim gelangt über zwei Ablaufbleche 7 durch deren Schrägstellung nach unten, wobei der Schleim auf einem Wasserfilm gleitet, der die Oberfläche der Ablaufbleche 7 benutzt. Bei dem in Fig. 1 dargestellten Ausführungsbeispiel einer Quetschstation 1 ist das linke Ablaufblech 7 als herkömmliches, ausschließlich gerade verlaufendes Ablaufblech 7 dargestellt, während das rechte Ablaufblech 7 vorschlagsgemäß ausgestaltet ist. Der geradflächige Abschnitt dieses vorschlagsgemäßen Ablaufbleches 7 ist als Gemischabschnitt 8 bezeichnet, auf welchem sowohl das Wasser als auch der Schleim geführt wird. An diesen Gemischabschnitt 8 schließt sich eine Biegung 9 an, an welcher der Schleim von dem Ablaufblech 7 herabtropft. Während sich das Wasser aufgrund der Kohäsionskräfte um die Biegung herumzieht und auch noch weiter am Ablaufblech 7 anhaftet, in einem sich an die Biegung 9 anschließenden Wasserabschnitt 10.

Wie insbesondere aus Fig. 2 ersichtlich ist, ist unterhalb der Biegung 9 eine Schleimrinne 11 vorgesehen, in welche der Schleim herabtropft, der sich im Bereich der Biegung 9 von dem Ablaufblech 7 löst. Zusätzlich zu dieser Schleimrinne ist als weitere Sammelrinne eine Wasserrinne 12 vorgesehen, in welche das Wasser gelangt, nachdem es sich von dem Wasserabschnitt 10 des Ablaufbleches 7 gelöst hat.

## Patentansprüche

1. Quetscheinrichtung einer Tierdarm-Reinigungslinie,
mit zwei Druckkörpern, zwischen die ein Tierdarm einführbar ist,
und mit einer tiefer als die Druckkörper angeordneten, als Ablaufblech bezeichneten und abwärts verlaufenden Führungsfläche, über deren Oberfläche aus dem Tierdarm austretender Schleim sowie Wasser nach unten abläuft, und mit einer unterhalb des Ablaufblechs angeordneten Schleimrinne, in welche der Schleim gelangt,
**dadurch gekennzeichnet,**
**dass** sich an den als Gemischabschnitt (8) bezeichneten Abschnitt des Ablaufblechs (7), auf welchem Schleim und Wasser ablaufen, in Strömungsrichtung eine konvexe Biegung (9) anschließt,
wobei die Biegung (9) derart geformt ist, dass sich der Schleim im Bereich der Biegung (9) vom Ablaufblech (7) löst,
wobei sich das Ablaufblech (7) über die Biegung (9) hinaus weiter erstreckt und in Strömungsrichtung hinter der Biegung (9) einen sogenannten Wasserabschnitt (10) aufweist, in welchem das Wasser dem Ablaufblech (7) weiter folgt,
und **dass** die Schleimrinne (11) derart unterhalb der Biegung (9) angeordnet ist, dass der im Bereich der Biegung (9) vom Ablaufblech (7) herabtropfende Schleim in die Schleimrinne (11) gelangt.

2. Quetscheinrichtung nach Anspruch 1,
**dadurch gekennzeichnet,**
**dass** der Wasserabschnitt (10) von der Biegung (9) aus mit geringer Neigung abwärts verläuft.

3. Quetscheinrichtung nach Anspruch 1,
**dadurch gekennzeichnet,**
**dass** der Wasserabschnitt (10) von der Biegung (9) aus horizontal verläuft.

4. Quetscheinrichtung nach Anspruch 1,
**dadurch gekennzeichnet,**
**dass** der Wasserabschnitt (10) von der Biegung (9) aus mit geringer Neigung aufwärts verläuft.

5. Quetscheinrichtung nach Anspruch 1 oder 2,
**dadurch gekennzeichnet,**
**dass** die Biegung (9) einen Radius von mehreren Zentimetern aufweist.

6. Quetscheinrichtung nach einem der vorhergehenden Ansprüche
**dadurch gekennzeichnet,**
**dass** das Ablaufblech (7) zumindest bereichsweise an seiner den Schleim und / oder das Wasser führenden Oberfläche beschichtet ist.

7. Quetscheinrichtung nach einem der vorhergehenden Ansprüche
**dadurch gekennzeichnet,**
**dass** das Ablaufblech (7) als metallisches Bauteil aus Blech ausgestaltet ist.

8. Ablaufblech (7) für eine Quetscheinrichtung (1) nach einem der Ansprüche 1 bis 7.

9. Ablaufblech nach Anspruch 8,
**dadurch gekennzeichnet,**
**dass** das Ablaufblech (7) als Ergänzungsteil im wesentlich lediglich die Biegung (9) und den Wasserabschnitt (10) als Führungsflächen für den Schleim und / oder das Wasser aufweist.

10. Ablaufblech nach Anspruch 8,
**dadurch gekennzeichnet,**
**dass** das Ablaufblech (7) als Austauschteil den Gemischabschnitt (8), die Biegung (9) und den Wasserabschnitt (10) als Führungsflächen für den Schleim und / oder das Wasser aufweist.

11. Ablaufblech nach Anspruch 10,
**dadurch gekennzeichnet,**
**dass** das Ablaufblech (7) Befestigungselemente wie Bohrungen oder Gewinde aufweist, welche den Befestigungselementen eines an einer Quetscheinrichtung (1) vorhandenen Ablaufblechs (7) entsprechen, derart, dass das Ablaufblech (7) als Austauschteil ohne Überarbeitungen an einer vorhandenen Quetscheinrichtung (1) gegen das dort bereits vorhandene Ablaufblech (7) austauschbar ist.

## Claims

1. Squeezing device for an animal-gut cleaning line having two pressure bodies between which the animal gut is inserted,
and having a downward-sloping guiding surface described as a draining plate arranged at a level lower than the pressure bodies, over whose surface the mucus and water emerging from the animal gut drain downwards, and having a channel arranged beneath the draining plate into which the mucus runs,
**characterised in that** a convex curvature (9) adjoins the section of the draining plate (7) described as the mixture section (8) on which the mucus and water drain downwards, which curvature (9) is formed in such a way that the mucus separates from the draining plate (7) in the area of the curvature (9),
where the draining plate (7) extends beyond the curvature (9) and has a so-called water section (10) after the curvature in the direction of flow, in which the water continues to follow the draining plate (7),
and that the mucus channel (11) is arranged beneath the curvature (9) in such a way that the mucus dropping off the draining plate (7) in the area of the curvature (9) runs into the channel (11).

2. Squeezing device in accordance with claim 1,
**characterised in that** the water section (10) extends downwards from the curvature (9) at a slight angle.

3. Squeezing device in accordance with claim 1,
**characterised in that** the water section (10) extends horizontally from the curvature.

4. Squeezing device in accordance with claim 1,
**characterised in that** the water section (10) extends upwards from the curvature (9) at a slight angle.

5. Squeezing device in accordance with claim 1 or claim 2,
**characterised in that** the curvature (9) has a radius of several centimetres.

6. Squeezing device in accordance with any of the preceding claims,
**characterised in that** the surface of the draining plate (7) which channels the mucus and/or water, is coated at least in parts.

7. Squeezing device in accordance with any of the preceding claims,
**characterised in that** the draining plate (7) is formed as a metallic component of metal sheet.

8. Draining plate (7) for the squeezing device (1) in accordance with any of the preceding claims 1 to 7.

9. Draining plate in accordance with claim 8
**characterised in that** the draining plate (7) as an integral part has basically only the curvature (9) and the water section (10) as channelling surfaces for the mucus and/or the water.

10. Draining plate in accordance with claim 8 **characterised in that**
the draining plate (7) as a replacement part has the mixture section (8), the curvature (9) and the water section (10) as channelling surfaces for the mucus and/or the water.

11. Draining plate in accordance with claim 10
**characterised in that** the draining plate (7) has fastening elements such as bores or threads which correspond to the fastening elements on a draining plate (7) already present on a squeezing device (1), in such a way that the draining plate (7) as a replacement part is capable of replacing the draining plate (7) already present on a squeezing device (1) without requiring any modification of the squeezing device (1).

## Revendications

1. Dispositif d'essorage sur une ligne de nettoyage de boyaux animaux comprenant deux corps de compression entre lesquels le boyau animal peut être introduit,
et une surface de guidage agencée plus bas que les corps de compression, appelée tôle d'écoulement et présentant un tracé descendant, via la surface de laquelle le mucus sortant du boyau animal ainsi que l'eau s'écoulent vers le bas, et une rigole à mucus agencée en dessous de la tôle d'écoulement et dans laquelle parvient le mucus,
**caractérisé en ce que** le segment appelé segment à mélange (8) de la tôle d'écoulement (7) et sur lequel le mucus et l'eau s'écoulent, est suivi, dans le sens de l'écoulement, d'une courbe (9) convexe,
sachant que la courbe (9) présente une forme telle que le mucus se détache de la tôle d'écoulement (7) dans la zone de la courbe (9),
sachant que la tôle d'écoulement (7) s'étend au-delà de la courbe (9) et présente, dans le sens de l'écoulement, en aval de la courbe (9), un segment dit à eau (10) dans lequel l'eau continue de suivre la tôle d'écoulement (7),
et que la rigole à mucus (11) est agencée en aval de la courbe (9) de sorte que le mucus qui goutte de la tôle d'écoulement (7) dans la zone de la courbe (9) gagne la rigole à mucus (11).

2. Dispositif d'essorage selon la revendication 1,
**caractérisé en ce que** le segment à eau (10) présente un tracé de faible inclinaison descendante à partir de la courbe (9).

3. Dispositif d'essorage selon la revendication 1, **caractérisé en ce que** le segment à eau (10) présente un tracé horizontal à partir de la courbe (9).

4. Dispositif d'essorage selon la revendication 1,
**caractérisé en ce que** le segment à eau (10) présente un tracé de faible inclinaison montante à partir de la courbe (9).

5. Dispositif d'essorage selon la revendication 1 ou 2,
**caractérisé en ce que** la courbe (9) présente un rayon de plusieurs centimètres.

6. Dispositif d'essorage selon l'une des revendications précédentes,
**caractérisé en ce que** la surface de guidage du mucus et/ou de l'eau que comporte la tôle d'écoulement (7) présente un revêtement au moins dans certaines zones.

7. Dispositif d'essorage selon l'une des revendications précédentes,
**caractérisé en ce que** la tôle d'écoulement (7) est configurée comme composant métallique en tôle.

8. Tôle d'écoulement (7) pour un dispositif d'essorage (1) selon l'une des revendications 1 à 7.

9. Tôle d'écoulement selon la revendication 8,
**caractérisée en ce que** cette même tôle d'écoulement (7) présente essentiellement, en tant que pièce complémentaire, seulement la courbe (9) et le segment à eau (10) qui officient de surface de guidage pour le mucus et/ou l'eau.

10. Tôle d'écoulement selon la revendication 8,
**caractérisé en ce que** la tôle d'écoulement (7) présente, en tant que pièce interchangeable, le segment à mélange (8), la courbe (9) et le segment à eau (10) qui officient de surface de guidage pour le mucus et / ou l'eau.

11. Tôle d'écoulement selon la revendication 10, **caractérisé en ce que**
la tôle d'écoulement (7) présente des éléments de fixation tels que des alésages ou filetages correspondant aux éléments de fixation d'une tôle d'écoulement (7) présente contre un dispositif d'essorage (1), de sorte que la tôle d'écoulement (7), qui est une pièce interchangeable, puisse être remplacée par la tôle d'écoulement (7) déjà présente à cet endroit sans qu'il faille effectuer des retouches sur un dispositif d'essorage (1) présent.
